# FASCICULE DE BREVET EUROPEEN

(11) **EP 0 375 485 B1**
(45) Date de publication et mention de la délivrance du brevet: **03.03.1993**
(21) Numéro de dépôt: 89403281.2
(22) Date de dépôt: 28.11.1989
(51) Int. Cl.: B29C 67/18, B29C 33/30, B29C 33/38

(54) **Dispositif d'obtention d'un vitrage muni d'un joint périphérique de protection des arêtes**
Vorrichtung zur Herstellung einer Verglasung, versehen mit einer seitlichen Schutzdichtung für die Kanten und Verwendung der Vorrichtung
Device for obtaining a window supplied with a peripheral protective joint for the edge and application of the device

(30) Priorité: 21.12.1988 FR 8816893
(43) Date de publication de la demande: 27.06.1990
(73) Titulaire: SAINT-GOBAIN VITRAGE INTERNATIONAL, 92400 Courbevoie (FR)
(72) Inventeur: Canaud, Michel, F-75116 Paris (FR); Dewitte, Philippe, F-60150 Thourotte (FR)
(74) Mandataire: Menes, Catherine

(56) Documents cités:
- EP-A- 0 069 021
- EP-A- 0 127 546
- WO-A-81/01682
- DE-A- 2 127 227
- DE-A- 2 428 510
- FR-A- 1 270 522
- FR-A- 2 245 460
- FR-A- 2 612 447
- JAPAN PLASTICS AGE, vol. 23, no. 204, juillet-août 1985, pages 33-38, Tokyo, JP; T. TSUYUSAKI: "Simple molds for plastics processing"

## Description

L'invention a trait aux techniques d'obtention de vitrages munis de joints périphériques de protection des arêtes. L'invention s'applique plus particulièrement aux vitrages multiples constitués d'au moins deux feuilles de verre maintenues séparées par une lame d'air intercalaire ou de tout autre gaz assurant une bonne isolation thermique et acoustique et assemblées par un joint périphérique coopérant avec un cadre entretoise.

Depuis de nombreuses années ont été développés différents perfectionnements tendant à l'amélioration de la qualité des vitrages multiples, et notamment à leur parfaite étanchéité en vue d'éviter les problèmes de condensation sur les faces inaccessibles des feuilles de verre. Toutefois, ces efforts ne sont réellement satisfaisants que si le vitrage est finalement correctement posé dans le châssis de la fenêtre avec une bonne garniture d'étanchéité de la feuillure. Lors de la pose du vitrage dans la feuillure, il faut en effet un positionnement correct du volume, tout en veillant à ce que les feuilles de verre aient une liberté de mouvement suffisante pour supporter les vibrations transmises par exemple par des engins de terrassement ou des véhicules circulant à proximité de la maison (on sait que le module d'élasticité du verre est extrêmement faible) et sans rompre l'étanchéité entre le vitrage et son châssis.

Pour satisfaire ces exigences en partie contradictoires, la feuillure généralement délimitée latéralement par le châssis lui-même et une parclose est munie d'une garniture souvent très complexe comportant par exemple une garniture principale formée par une bande préformée dans un matériau à haute adhésivité et présentant une plasticité permanente du type caoutchouc butyl-polyisobutylène et une garniture secondaire constituée par un obturateur sur fond de joint (mastic silicone recouvert d'une bande à peau superficielle délimitant la section). Cette complexité explique qu'une pose correcte ne peut être obtenue que grâce à un spécialiste - ce qui bien sûr accroît les coûts -faute de quoi des erreurs importantes peuvent être commises telles l'emploi d'un mastic traditionnel à base d'huile de lin incompatible avec la matière utilisée pour le joint d'étanchéité périphérique du vitrage multiple.

Nous n'avons évoqué jusqu'à présent que le cas de la pose des vitrages multiples, mais un problème très similaire se pose avec de simples vitrages bâtiment ou les vitrages automobiles que ceux-ci soient des vitrages feuilletés (cas des pare-brise) ou des vitrages trempés (cas généralement des vitres latérales et des lunettes arrières).

Tous ces problèmes de pose d'une garniture d'étanchéité dans la feuillure sont évidemment supprimés si on peut opérer un montage direct et non en bain de mastic, ce qui n'est possible que si les bords des feuilles de verre sont protégés par un joint périphérique comportant des lèvres de recouvrement.

De tels joints périphériques peuvent être constitués par des pièces préformées rapportées, mais cette solution n'est généralement pas jugée satisfaisante car pour garantir la continuité de la barrière d'étanchéité, il faut utiliser une colle adhésive entre ces pièces préformées et le vitrage.

Par contre, une excellente solution est obtenue par l'encapsulation des vitrages, c'est-à-dire le surmoulage d'un joint périphérique. En polymérisant directement sur le vitrage, le joint en épouse ainsi parfaitement les contours et si de plus on choisit un matériau qui présente une adhésivité ad hoc relativement au verre, on obtient une barrière d'étanchéité continue d'une qualité supérieure à ce qui peut être obtenu par d'autres moyens. De plus, comme cette pièce est moulée, elle est parfaitement calibrée de sorte qu'il est possible de fournir des vitrages dont les cotes sont rigoureusement conformes au gabarit souhaité. Il doit être souligné que le problème de garantie de cotes externes d'un vitrage se pose pour les vitrages bombés tels les vitrages automobiles, pour les vitrages multiples dont l'épaisseur de la lame d'air intercalaire peut varier par exemple en fonction de la quantité de mastic utilisée pour coller le cadre entretoise lorsque celui-ci est un aluminium et même avec des vitrages simples bâtiment car il faut tenir compte des tolérances d'épaisseur des feuilles de verre accordées par exemple pour le procédé de fabrication float.

De façon classique, on procède au surmoulage d'un vitrage en l'enfermant entre les deux plateaux d'un moule fermé par des moyens appropriés pour délimiter une cavité étanche dans laquelle on injecte la matière plastique. Des exemples de réalisations sont connus par exemple des demandes de brevet EP-A-0 127 546 et EP-A-0 236 211. Mais pour mettre en oeuvre un tel procédé, il est nécessaire de disposer d'autant de moules que de dimensions de vitrages - voir de plusieurs moules par taille si différents profils de joints sont souhaités. Or ces moules sont d'un prix de revient élevé en raison de la précision d'usinage requise pour les plateaux. En pratique l'encapsulation est de ce fait une technique aujourd'hui réservée aux produits verriers de très grande série.

Il a été également proposé dans la demande de brevet EP-A-0 069 021 de protéger les arêtes sur le pourtour d'un vitrage isolant en plaçant sur les faces externes du vitrage deux gabarits munis sur leur bord d'un évidement correspondant aux contours extérieurs souhaités pour la garniture, la matière plastique injectée dans la gorge séparant les deux gabarits. Là encore, il faut autant de gabarits que de types de vitrages. D'autre part, il se pose le problème de contrôle de la quantité de matière plastique appliquée, plus particulièrement dans les angles.

Il a été proposé dans la demande de brevet WO-A-81/01682 de fabriquer des profilés à l'aide de moules "composites" qui notamment peuvent s'adapter, par l'emploi de pièces interchangeables, à différents types de profils. Cependant, il ne s'agit pas d'une technique de surmoulage direct par encapsulation de vitrage.

L'article scientifique "Japan Plastics Age" (vol. 23 - No. 204 - p. 33 - 38 - TOKYO, T. TSUYUSAKI "Single molds for plastics processing") a trait quant à lui à la fabrication de moules en matériaux plastiques, et par exemple en polyuréthane de manière générale.

La présente invention vise une technique d'encapsulation nécessitant des investissements très nettement moindres que ceux exigés par les techniques classiques d'encapsulation, ceci en vue notamment de la production de petites séries de volumes, telles que rencontrées plus particulièrement dans le marché des produits bâtiment.

La technique d'encapsulation selon l'invention consiste à enserrer le vitrage dans un moule, constitué par différents éléments modulaires réalisés dans une matière moulable et réunis par des moyens d'assemblage, délimitant autour du vitrage une cavité dont les parois correspondent au profil extérieur souhaité. Dans cette cavité on injecte sous une pression comprise entre 3 et 10 bars une solution réactive liquide donnant après condensation in-situ une matière plastique formant le joint périphérique. Un orifice d'injection doit être prévu dans au moins un des éléments modulaires ; de même au moins un de ces éléments modulaires doit comporter un évent.

L'invention, pour mettre en oeuvre cette technique, utilise un dispositif de moulage d'un joint périphérique d'encapsulation de vitrage à l'aide d'un moule délimitant autour du vitrage une cavité dont les parois correspondent à un profil extérieur de joint donné, ledit dispositif comportant un dispositif d'injection sous basse pression (1-10 bars) alimentant en solution réactive par condensation et/ou de nature thermodurcissable un moule constitué de deux demi-moules complémentaires comportant chacun une pluralité d'éléments modulaires unitaires aboutés directement, sans interposition d'éléments d'étanchéité, avec des surfaces de jonction planes, au moins un élément étant muni d'un orifice d'injection et au moins un autre d'un évent, le nombre et/ou la longueur de ces éléments étant déterminé(s) selon les dimensions du vitrage.

Ces éléments modulaires sont de préférence moulés à partir d'un profilé unique qui constitue le moule mère, réalisé par exemple en aluminium, c'est-à-dire dans un matériau pratiquement inaltérable lui assurant une très grande longévité mais dont le coût d'usinage est assez important. Toutefois ce dernier inconvénient est fortement minoré du fait qu'il suffit d'un moule-mère par profil de joint souhaité. Ce moule-mère à de préférence une longueur d'environ 1 mètre qui correspond par exemple à une dimension moyenne typique de la largeur d'un vitrage. Il peut être plus petit, mais cela entraîne l'obligation de recourir à un plus grand nombre d'éléments modulaires pour constituer un moule autour du vitrage. Les éléments modulaires assemblés au niveau des angles du vitrage sont de préférence coupés en onglets. Toutes les surfaces de découpe sont de plus rectifiées afin d'autoriser une bonne étanchéité au moment de l'assemblage ; cette opération est bien sûr simplifiée si on utilise comme matière moulable un matériau d'usinage aisé. De préférence et pour ce qui concerne les surfaces destinées à constituer les parois du moule d'encapsulation, les éléments modulaires sont utilisés à l'état brut de démoulage, sans reprise de l'état de surface.

Notons que l'emploi d'éléments modulaires permet de remplacer les éléments prématurément endommagés.

Les moyens d'assemblage des différents éléments modulaires, nécessaires pour former un moule continu sans fuite entre lesdits éléments modulaires, sont de façon surprenante extrêmement simples. De très bons résultats sont par exemple obtenus lorsque les éléments modulaires constitutifs de chaque demi-moule sont fixés les uns à côté des autres sur des plaques rigides - en bois contreplaqué ou découpées dans une tôle - au moyen de vis ou cheville . Une autre solution, éventuellement complémentaire de la première, est l'assemblage par tenons et mortaises associés à un assemblage formant une ceinture autour du demi-moule du type feuillard. Ces moyens d'assemblage extrêmement courants - et auxquels on peut substituer sans sortir du cadre de l'invention d'autres moyens connus de l'homme de l'art - peuvent être mis en oeuvre sans difficultés par de petites unités de fabrication du type miroiterie artisanale.

Cette simplicité de mise en oeuvre était totalement inattendue compte-tenu de la pratique usuelle en matière d'encapsulation de vitrages où l'on sait que les problèmes d'étanchéité entre le verre et le moule sont au centre des préoccupations de la technique. Et pourtant, il faut bien noter que le procédé selon l'invention utilise l'injection d'une solution réactive liquide et nullement une matière plastique fortement thixotrope.

Un cas particulièrement avantageux de mise en oeuvre du procédé selon l'invention est celui de l'encapsulation de vitrages isolants encore inachevés, c'est-à-dire comportant seulement une première barrière d'étanchéité en matière plastique de préférence du type mastic à base de caoutchouc butyl et/ou de polyisobutylène soit cette barrière d'étanchéité servant de colle à un profilé métallique formant le cadre entretoise, soit cette barrière d'étanchéité constituant elle-même le cadre entretoise. Le joint périphérique injecté selon l'invention sert alors de seconde barrière d'étanchéité. Les vitrages isolants ainsi obtenus sont conformes à ceux décrits dans la demande de brevet EP 236 211.

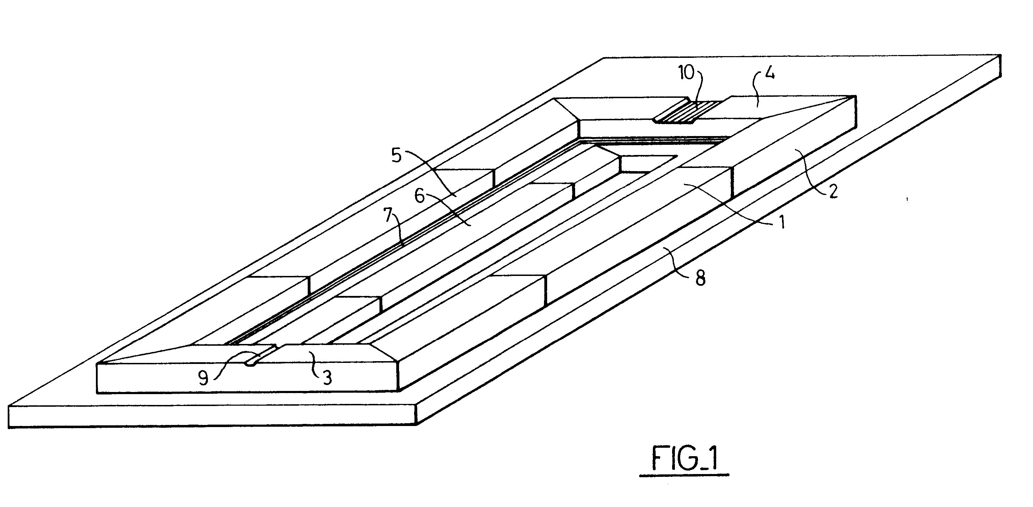

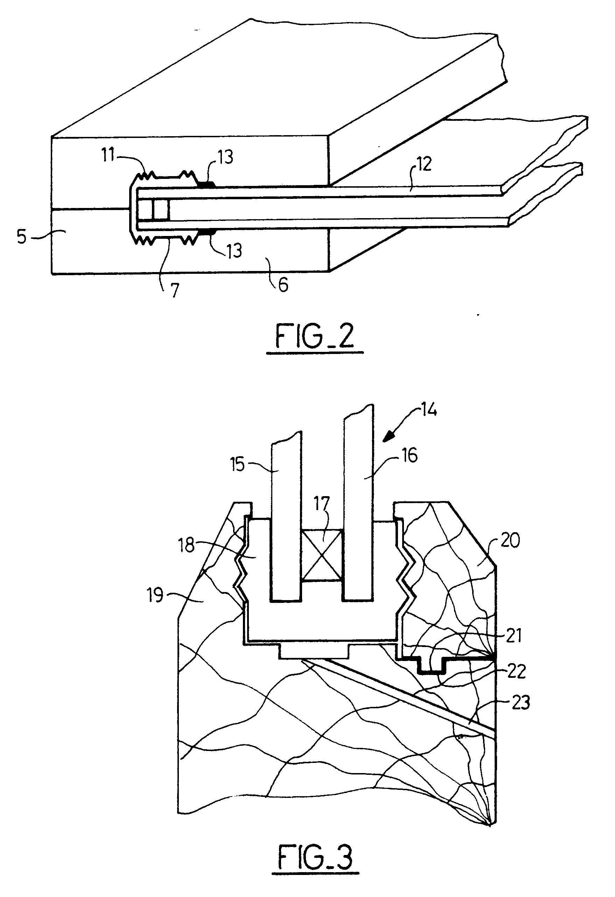

D'autres détails et caractéristiques avantageux de l'invention sont décrits ci-après en référence aux dessins annexés qui représentent :
. **figure 1:** une vue en perspective d'un moule constitué d'éléments modulaires selon l'invention,
. **figure 2:** une coupe d'un vitrage isolant enserré dans un moule d'encapsulation,
. **figure 3:** un schéma de montage en feuillure sèche d'un vitrage obtenu par le procédé selon l'invention.

A la figure 1 est représentée la partie inférieure d'un moule obtenu à partir d'éléments modulaires selon l'invention, étant bien entendu qu'il lui correspond une partie supérieure qui par souci de clarté n'a pas été ici représentée.

Le moule de la figure 1 convient par exemple pour un double vitrage bâtiment et est ici constitué de huit éléments modulaires (1, 2, 3, 4) constitués par des profilés qui vus de côté (confère figure 2) ont la forme d'une feuillure fermée par une parclose, c'est-à-dire un profil en "U" à deux branches verticales d'inégales hauteurs, une partie haute 5 délimitant la paroi extérieure de la cavité de moulage et une partie basse 6 servant de surface d'appui pour l'objet à surmouler 12. Le fond 7 de feuillure est généralement muni de différentes rainures 11 convenant à la forme désirée. Pour les côtés de grande longueur, on utilise des profilés 1 à bords droits alors que les éléments modulaires d'angle 2 présentent au moins un bord coupé en onglet. De toute façon les surfaces de jonction entre deux éléments modulaires doivent être parfaitement planes pour permettre une parfaite juxtaposition des éléments les uns à côté des autres.

Les éléments modulaires sont de préférence aboutés directement les uns aux autres, en contact direct sans interposition d'éléments d'étanchéité. Ils sont assemblés entre eux par exemple par tenons et mortaises et sont de préférence fixés également à une plaque support rigide 8 par exemple en bois contreplaqué ou découpée dans une tôle suffisamment épaisse. Il peut être également utilisé un marbre comportant différents logements correspondant aux différentes dimensions des vitrages habituellement fabriqués ou équipés d'une série d'au moins 4 vérins à grande course qui appuient sur les éléments modulaires au niveau des angles du moule, la longueur de la course du vérin permettant d'adapter le cadre ainsi formé aux différentes tailles de vitrages.

L'élément modulaire 3 comporte un évidement semi-cylindrique 9 qui forme le trou d'injection. L'élément modulaire 4 qui lui fait face est lui muni d'un évent 10 d'évacuation d'air lors de l'injection. Pour les grands volumes, par exemple des vitrages pour portes fenêtres, il peut être éventuellement prévus deux ou plus trous d'injection.

La fermeture du moule est assurée par des moyens de serrage par exemple du type serre-joints ou tout autre moyen équivalent ; il doit être seulement noté à ce propos, que les pressions mises en oeuvre sont relativement faibles et qu'en conséquence il n'est pas nécessaire de recourir à des presses hydrauliques ou autres instruments demandant un investissement assez important de la part du fabricant. Avantageusement les éléments modulaires peuvent contenir un électro-aimant, noyé dans la matière moulable au moment du moulage à partie du moule-mère, et relié à un circuit électrique de sorte que la fermeture du moule est alors électromagnétique, des noyaux métalliques étant noyés dans les éléments modulaires correspondant de l'autre demi-moule.

Pour éviter des bavures sur le vitrage, les surfaces d'appui 6 sont de préférence équipées d'un joint 13 formé par un film souple de faible épaisseur, par exemple en matière plastique avec une face adhésive pour le coller sur le moule.

Dans ce même esprit d'écarter le travail d'ébardage à la sortie du moule, les éléments modulaires selon l'invention sont de préférence à bords francs, sans dépouille destinée au démoulage. Pour assurer celui-ci, il est alors nécessaire de prévoir à l'arrière du moule une plaque qui permet de délimiter entre le moule et le vitrage une cavité étanche dans laquelle on insuffle de l'air comprimé jusqu'à provoquer le décollage du moule. Cette plaque peut être avantageusement constituée par la plaque support 8.

Il va de soi que ce démoulage est facilité par l'application sur les éléments modulaires d'un agent de démoulage, par exemple une cire liquide que l'on applique également sur les parties du vitrage non destinées à être recouvertes par le joint périphérique, ceci afin de permettre un nettoyage aisé du vitrage si de la matière plastique venait à le souiller.

Les éléments modulaires 1, 2, 3, 4 sont des pièces réalisées dans une matière moulable à partir d'un moule-mère de préférence en aluminium. Comme matière moulable, on peut avantageusement utilisé un polyuréthane donnant des produits durs après polymérisation, c'est-à-dire présentant une dureté Shore instantanée supérieure à 90 Shore A. Le moule doit en effet présenter une rigidité suffisante pour éviter toute déformation au moment de l'injection autour du vitrage. De plus cette matière moulable doit permettre de sortir des produits du moule-mère directement, sans reprise de l'état de surface, si ce n'est un travail de découpe des éléments modulaires pour leur donner la longueur souhaitée, de mortaisage pour faciliter l'assemblage et éventuellement un aplanissement de la surface en contact avec la plaque support.

A titre indicatif, le polyuréthane commercialisé par la société HEXEL France sous la dénomination Rezovit 51-40 à donné parfaitement satisfaction. Un aspect important de l'invention réside dans l'emploi de matières de moulage extrêmement peu onéreuses ce qui autorise des fabrications même pour des séries très réduites de moins de 50 vitrages par exemple.

Après la mise en place du vitrage 12 dans le moule, on injecte sous une pression comprise entre 3 et 10 bars une solution réactive liquide donnant après condensation une matière plastique, par exemple du type polyuréthane, qui présente de préférence une dureté Shore instantanée comprise entre 50 et 70 Shore A (mesurée avec un duromètre aux normes DIN 53 505 et ISO R868, la valeur relevée correspondant à la plus grande déviation observée de l'aiguille du duromètre), un allongement à la rupture de 400 % à 20° C et une faible déformation permanente à la compression, c'est-à-dire que la déformation rémanente à la compression doit rester inférieure à 25 % après une épreuve de 24 heures à 70° C. De préférence cette matière plastique présente après durcissement un taux de matière sèche élevé, supérieur par exemple à 97 % de façon à éviter tout problème dû à la présence de solvants. De plus, pour autoriser des cadences de production raisonnable, il est préférable que le temps de fil du polymère soit inférieur à 2 minutes.

A titre indicatif, de bons résultats ont été obtenus avec un polyuréthane commercialisé par la société REVCO sous la dénomination REVORIM 20A ref : LABO I 0021/001 A et I 0021/003 B. Ce mélange comprend un composé A à base de polyols, type polyéthers, dont la masse volumique au pycnomètre, à 23° C est de 1,05 g/cm³, la viscosité Brookfield de 710 CPS et l'extrait sec supérieur à 98 % après 3 heures à 105° C. Le second composé B, du type isocyanate, dénommé REVORIM 20B ref : LABO I 0021/003 B, a une masse volumique au pycnomètre à 23° C de 1,12 g/cm³ et de même un extrait sec supérieur à 98 %. Un mélange dans un rapport pondéral A/B = 53,8 / 46,2 a un temps de démoulage de 1 minute 30 à 23° C.

Des polyuréthanes présentant un temps de fil un peu plus élevé peuvent être également employés en prévoyant éventuellement des moyens de chauffage associés au moule à éléments modulaires de façon à maintenir le temps d'immobilisation d'un moule dans une limite raisonnable économiquement parlant.

Un cas particulièrement avantageux d'application de l'invention est celui de l'encapsulation de double vitrage simplement muni d'un cadre intercalaire comportant au moins pour sa surface de contact avec les feuilles de verre un mastic à base de caoutchouc butyl et/ou de polyisobutylène. Dans ce cas, le joint périphérique moulé selon l'invention fait office à la fois de seconde barrière d'étanchéité (et il s'agit là d'une barrière remarquablement étanche car on peut obtenir une liaison cohésive entre ce joint périphérique et le mastic à base de caoutchouc butyl et/ou de polyisobutylène) et de profilé de montage comme il est plus particulièrement montré à la figure 3. Sur cette figure on a en effet représenté un double vitrage 14 constitué de deux feuilles de verre 15, 16 espacées par une entretoise 17 de préférence en matière plastique du type caoutchouc butyl et/ou de polyisobutylène et pourvu d'un joint périphérique 18 moulé présentant un certain nombre d'encoches 11. Ces encoches 11 correspondent exactement au profil de la feuillure 19 fermée par une parclose 20 munie avantageusement d'un ergot 21 qui s'emboîte dans une rainure 22 de la feuillure. De façon usuelle pour l'homme de l'art, un trou d'évacuation des eaux est prévu dans le fond de la feuillure 19 pour assurer le drainage. On a ainsi une pose du vitrage extrêmement simplifiée, d'autant que par ailleurs le joint périphérique protège les arêtes du vitrage pendant son transport et supprime pratiquement tout risque de casse.

L'exemple de montage de la figure 3 ne concerne que le cas de la pose d'un vitrage isolant, mais l'invention s'applique également comme indiqué dans le préambule à de simples vitrages bâtiment ou même des vitrages automobiles.

Il apparaît à la lecture du texte précédent que les moyens d'étanchéité mis en oeuvre sont pratiquement inexistants, ce qui n'est possible que du fait de l'utilisation d'une basse pression d'injection qui fait que même dans la zone d'aboutement des éléments modulaires, il ne se produit pas de fuites malgré l'emploi de moyens d'assemblage simples qui ne comprennent notamment pas de pièces d'étanchéité entre les différents éléments modulaires.

## Revendications

1. Dispositif de moulage d'un joint périphérique (18) d'encapsulation de vitrage (14) à l'aide d'un moule délimitant autour du vitrage une cavité dont les parois correspondent à un profil extérieur de joint donné, **caractérisé en ce qu'**il comprend un dispositif d'injection sous basse pression, entre 1 et 10 bars, alimentant en solution réactive par condensation et/ou de nature thermodurcissable un moule constitué de deux demi-moules complémentaires comportant chacun une pluralité d'éléments modulaires unitaires (1, 2, 3, 4) aboutés directement sans interposition d'éléments d'étanchéité avec des surfaces de jonction planes, au moins un élément (3) étant muni d'un orifice d'injection (9) et au moins un autre élément (4) d'un évent (10), le nombre et/ou la longueur de ces éléments étant déterminé(s) selon les dimensions de chaque vitrage.

2. Dispositif selon la revendication 1, **caractérisé en ce que** les éléments modulaires (1, 2, 3, 4) sont coupés au niveau des angles du vitrage en onglets.

3. Dispositif selon la revendication 1 ou 2, **caractérisé en ce que** les éléments modulaires (1, 2, 3, 4) de chaque demi-moule sont maintenus aboutés par fixation sur une plaque-support rigide (8) et/ou par assemblage à l'aide de tenons et mortaises associés à une ceinture et/ou par assemblage à l'aide de feuillards.

4. Dispositif selon l'une des revendications 1 à 3, **caractérisé en ce que** des électro-aimants sont noyés dans les éléments modulaires d'un des demi-moules, des noyaux métalliques étant noyés dans les éléments modulaires de l'autre demi-moule, lesdits électro-aimants et noyaux métalliques assurant l'ouverture et la fermeture du moule.

5. Dispositif selon l'une des revendications 3 ou 4, **caractérisé en ce qu'**il comporte à l'arrière du moule une plaque délimitant entre moule et vitrage une cavité, cette cavité permettant d'insuffler de l'air comprimé pour provoquer le décollement du vitrage hors du moule.

6. Dispositif selon l'une des revendications précédentes, **caractérisé en ce que** les éléments modulaires (1, 2, 3, 4) sont en polyuréthane d'une dureté Shore supérieure à 90 Shore A.

7. Dispositif selon l'une des revendications précédentes, **caractérisé en ce qu'**il comporte un agent de démoulage enduisant les parties du vitrage (14) non destinées à être recouvertes par le joint périphérique (18).

8. Application du dispositif selon l'une des revendications précédentes au moulage d'un joint d'encapsulation (18) à base de polyuréthane, ayant notamment un temps de fil inférieur à 2 minutes, une dureté après condensation comprise entre 50 et 70 Shore A, un allongement à la rupture de 400 % à 20°C et une déformation rémanente à la compression inférieure à 25 % après 24 heures à 70°C.

9. Application du dispositif selon l'une des revendications précédentes au moulage d'un joint d'encapsulation (18) d'un double vitrage (14) muni d'un cadre intercalaire comportant au moins pour sa surface de contact avec le verre un mastic (17) à base de caoutchouc butyl et/ou polyisobutylène, avec liaison cohésive entre le joint d'encapsulation (18) et ledit mastic (17).

10. Application du dispositif selon l'une des revendications précédentes à une technique de moulage par injection réactive RIM.

## Patentansprüche

1. Vorrichtung zum Formen einer peripheren Dichtung (18) zur Einrahmung einer Verglasung (14) mit Hilfe einer Form, die um die Verglasung herum einen Hohlraum läßt, dessen Grenzen dem äußeren Profil einer gewünschten Dichtung entsprechen, dadurch gekennzeichnet, daß sie eine Vorrichtung zur Injektion unter niedrigem Druck, zwischen 1 und 10 bar, umfaßt, die eine durch Kondensation reaktive und/oder thermisch aushärtbare Lösung in eine aus zwei komplementären Halbformen gebildete Form einführt, wobei jede der komplementären Halbformen eine Vielzahl von einheitlichen Modulelementen (1, 2, 3, 4) aufweist, die direkt ohne dazwischenliegende Dichtelemente mit planen Verbindungsflächen aneinandergefügt sind, wobei wenigstens ein Element (3) mit einer Injektionsöffnung (9) und wenigstens ein anderes Element (4) mit einer Entlüftung (10) ausgestattet ist, und wobei die Zahl und/oder die Länge dieser Elemente von den, Dimensionen einer jeden Verglasung bestimmt ist.

2. Vorrichtung nach Anspruch 1, dadurch gekennzeichnet, daß die Modulelemente (1, 2, 3, 4) im Bereich der Ecken der Verglasung auf Gehrung geschnitten sind.

3. Vorrichtung nach Anspruch 1 oder 2, dadurch gekennzeichnet, daß die Modulelemente (1, 2, 3, 4) einer jeden Halbform durch Fixierung auf einer starren Trägerplatte (8) und/oder durch Anordnung mit Hilfe von Zapfen und Nuten, die mit einer Umgürtung verbunden sind, und/oder durch Montage mit Hilfe von Bandeisen zusammengehalten werden.

4. Vorrichtung nach einem der Ansprüche 1 bis 3, dadurch gekennzeichnet, daß Elektromagneten in die Modulelemente einer der Halbformen eingelassen sind und Metallkerne in die Modulelemente der anderen Halbform eingelassen sind, wobei die Elektromagnete und die Metallkerne das Öffnen und Schließen der Form ermöglichen.

5. Vorrichtung nach einem der Ansprüche 3 oder 4, dadurch gekennzeichnet, daß sie auf der Rückseite der Form eine Platte aufweist, die zwischen Form und Verglasung einen Hohlraum definiert, der das Einblasen von komprimierter Luft zum Trennen von Verglasung und Form erlaubt.

6. Vorrichtung nach einem der vorstehenden Ansprüche, dadurch gekennzeichnet, daß die Modulelemente (1, 2, 3, 4) aus Polyurethan einer Shore-Härte von mehr als 90 Shore A bestehen.

7. Vorrichtung nach einem der vorstehenden Ansprüche, dadurch gekennzeichnet, daß sie ein Entformungsmittel aufweist, das die Teile der Verglasung (14) bedeckt, die nicht von der Randdichtung (18) abgedeckt werden sollen.

8. Anwendung der Vorrichtung nach einem der vorstehenden Ansprüche zum Formen einer Rahmendichtung (18) auf Basis von Polyurethan, das insbesondere eine Topfzeit von weniger als 2 Minuten hat, eine Festigkeit nach der Kondensation zwischen 50 und 70 Shore A, eine Reißdehnung von 400 % bei 20° C und eine bleibende Druckverformung von weniger als 25 % nach 24 Stunden bei 70° C.

9. Anwendung der Vorrichtung nach einem der vorstehenden Ansprüche zur Ausbildung der Rahmendichtung (18) einer Doppelverglasung (14) mit einem eingeschobenen Rahmen, der wenigstens hinsichtlich seiner Oberfläche in Kontakt mit dem Glas einen Kunststoff (17) auf Basis von Butylkautschuk und/oder Polyisobutylen aufweist sowie eine cohäsive Verbindung zwischen der Rahmendichtung (18) und dem Kunststoff (17).

10. Anwendung der Vorrichtung nach einem der vorstehenden Ansprüche beim Formen durch Reaktionsspritzen RIM.

## Claims

1. Device for moulding a peripheral seal (18) for encapsulating a pane (14) by means of a mould defining, around the pane, a cavity having wall faces corresponding to a given external profile for a seal, characterized in that it comprises a device for injecting under low pressure, of from 1 to 10 bars, supplying a solution reacting by condensation and/or of thermo-setting type to a mould constituted of two complementary half-moulds, each comprising a plurality of unitary modular element: (1, 2, 3, 4) directly abutting one another without inter-position of sealing elements at plane junction surfaces, at least one element (3) being provided with an injection orifice (9) and at least one other element (4) with a vent (10), the number and/or the length of these elements being determined according to the dimensions of each pane.

2. Device according to Claim 1, characterized in that the modular elements (1, 2, 3, 4) are cut to a mitre at the corners of the pane.

3. Device according to Claim 1 or 2, characterized in that the modular elements (1, 2, 3, 4) of each half-mould are held together by fixing on a rigid support plate (8) and/or by assembling together by mortise and tenon associated with a belt and/or by assembing together with metal strips.

4. Device according to one of Claims 1 to 3, characterized in that electromagnets are embedded in the modular elements of one of the half-moulds, metal cores being embedded in the modular elements of the other half-mould, said electromagnets and metal cores assuring the opening and closing of the mould.

5. Device according to one of Claims 3 or 4, characterized in that it comprises, at the back of the mould, a plate delimiting a cavity between mould and pane, this cavity allowing compressed air to be blown in to cause the release of the pane from the mould.

6. Device according to one of the preceding Claims, characterized in that the modular elements (1, 2, 3, 4) are of polyurethane of a Shore hardness greater than 90 Shore A.

7. Device according to one of the preceding Claims, characterized in that it comprises a demoulding agent coating the parts of the pane (14) not intended to be covered by the peripheral seal (18).

8. Application of the device according to one the preceding Claims to the moulding of an encapsulation seal (18) based upon polyurethane, notably having a flow time of less than 2 minutes, a hardness after condensation of from 50 to 70 Shore A, an elongation at rupture of 400 % at 20°C and a residual deformation under compression of less than 25% after 24 hours at 70°C.

9. Application of the device according to one of the preceding Claims to the moulding of an encapsulation seal (18) for a double glazing pane (14) provided with an intermediate frame comprising, at least for its contact surface with the glass, a mastic (17) based upon butyl rubber and/or polyisobutylene, with a cohesive bond between the encapsulation seal (18) and said mastic (17).

10. Application of the device according to one of the preceding Claims to a reactive injection moulding technique.
